# EUROPÄISCHE PATENTANMELDUNG

(11) **EP 3 832 854 A1**
(43) Veröffentlichungstag der Anmeldung: **09.06.2021**
(21) Anmeldenummer: 19214141.4
(22) Anmeldetag: 06.12.2019
(51) Int. Cl.: H02K 3/52, H02K 11/215

(54) **INNENKALIBRIERUNG LAGERSITZ UND HALL PCB IN STATOR**

(71) Anmelder: Hilti Aktiengesellschaft, 9494 Schaan (LI)
(72) Erfinder: Artmann, Konrad, 86938 Schondorf (DE); Dietl, Lothar, 86916 Kaufering (DE); Schmid, Tobias, 86875 Emmenhausen (DE); Burger, Helmut, 86944 Unterdießen (DE)
(74) Vertreter: Hilti Aktiengesellschaft Corporate Intellectual Property

(57) **Zusammenfassung**

Elektromotor, insbesondere für eine Werkzeugmaschine, enthaltend einen Rotor und einen Stator mit einer Statorblechpaket, einer Wickelstützvorrichtung sowie einer Winkelmesseinheit, wobei das Statorblechpaket eine Vielzahl an Polzähnen enthält und wobei die Winkelmesseinheit wenigstens einem Hall-Sensor zum Erfassen eines Drehwinkels des Rotors relativ zum Stator enthält und die Winkelmesseinheit zum Kommutieren des Elektromotors in Abhängigkeit des erfassten Drehwinkels ausgestaltet ist.

Die Wickelstützvorrichtung enthält wenigstens zwei Ausrichtstege, welche zur Ausrichtung sowohl der Wickelstützvorrichtung als auch der Winkelmesseinheit zum Statorblechpaket sowie zur Bildung einer formschlüssigen Verbindung der Wickelstützvorrichtung mit dem Statorblechpaket in Freiräume zwischen den Polzähnen positionierbar sind.

## Beschreibung

Die vorliegende Erfindung betrifft einen Elektromotor, insbesondere für eine Werkzeugmaschine, enthaltend einen Rotor und einen Stator mit einer Statorblechpaket, einer Wickelstützvorrichtung sowie einer Winkelmesseinheit, wobei das Statorblechpaket eine Vielzahl an Polzähnen enthält und wobei die Winkelmesseinheit wenigstens einem Hall-Sensor zum Erfassen eines Drehwinkels des Rotors relativ zum Stator enthält und die Winkelmesseinheit zum Kommutieren des Elektromotors in Abhängigkeit des erfassten Drehwinkels ausgestaltet ist.

Elektromotoren, insbesondere bürstenlose Elektromotoren, mit einem Stator sowie einem sich in dem Stator drehenden Rotor sind durch den Stand der Technik weitgehend bekannt. Die europäische Patentanmeldung EP 3 316 454 A1 zeigt beispielsweise einen Elektromotor gemäß dem Stand der Technik.

Ein Elektromotor gemäß dem Stand der Technik enthält üblicherweise im Wesentlichen Stator und einen sich relativ zum Stator drehenden Rotor.
Der Rotor für einen Elektromotor enthält ein Rotorblechpaket und eine Rotorwelle. Das Rotorblechpaket besteht wiederum für gewöhnlich aus einer Anzahl an hintereinander angeordneten einzelnen Paketblechen. Die Rotorwelle ist durch eine zentrale Öffnung des Rotorblechpakets positioniert ist. Damit sich der Rotor relativ zum Stator drehen kann, verläuft eine Rotorwelle durch die Mitte des Rotors. Die Rotorwelle wird über ein oder mehrere Rotorwellenlager gehalten bzw. gelagert.
Der Stator für den Elektromotor enthält ein Statorblechpaket, welches ebenfalls aus einer Anzahl an hintereinander angeordneten einzelnen Paketblechen. Des Weiteren enthält der Stator neben Wickelstützen für den Wickeldraht der Spulen auch eine Kommutierungseinrichtung zum Kommutieren des Elektromotors. Bei einem elektronisch kommutierten Elektromotor verfügt die Kommutierungseinrichtung über Hall-Sensoren, um die Magnete des Rotors und damit die Drehwinkelposition des Rotors relativ zum Stator zu erfassen.
Zur Montage des Elektromotors werden die einzelnen Komponenten des Elektromotors, insbesondere Rotor und Stator, miteinander verbunden. Die Montage bzw. das Zusammensetzen der einzelnen Komponenten sind dabei häufig komplex, zeitraubend und daher kostenintensiv. Insbesondere die passgenaue Anordnung bzw. Positionierung der Wickelstützvorrichtung zum Statorblechpaket stellt dabei ein besondere Herausforderung dar.

Aufgabe der vorliegenden Erfindung ist es daher, einen Elektromotor bereitzustellen, mit dem das vorstehend genannte Problem gelöst und eine möglichst Montage erreicht werden kann.

Die Aufgabe wird entsprechend gelöst durch den Gegenstand des unabhängigen Anspruchs 1. Weitere vorteilhafte Ausgestaltungsformen der Erfindung finden sich in den entsprechenden Unteransprüchen.

Die Aufgabe wird insbesondere gelöst durch einen Elektromotor, insbesondere für eine Werkzeugmaschine, enthaltend einen Rotor und einen Stator mit einer Statorblechpaket, einer Wickelstützvorrichtung sowie einer Winkelmesseinheit, wobei das Statorblechpaket eine Vielzahl an Polzähnen enthält und wobei die Winkelmesseinheit wenigstens einem Hall-Sensor zum Erfassen eines Drehwinkels des Rotors relativ zum Stator enthält und die Winkelmesseinheit zum Kommutieren des Elektromotors in Abhängigkeit des erfassten Drehwinkels ausgestaltet ist.

Erfindungsgemäß ist vorgesehen, dass die Wickelstützvorrichtung wenigstens zwei Ausrichtstege enthält, welche zur Ausrichtung sowohl der Wickelstützvorrichtung als auch der Winkelmesseinheit zum Statorblechpaket sowie zur Bildung einer formschlüssigen Verbindung der Wickelstützvorrichtung mit dem Statorblechpaket in Freiräume zwischen den Polzähnen positionierbar sind.

Gemäß einer vorteilhaften Ausgestaltungsform kann es möglich sein, dass jeder Ausrichtsteg eine erste und zweite Seitenkante enthält, wobei an der ersten Seitenkante eine sich in eine Richtung erstreckende erste Feder und an der zweiten Seitenkante eine sich in eine Richtung erstreckende zweite Feder enthalten und wobei jeder Polzahn jeweils ein Zahnfuss mit einem ersten und zweiten Ende enthält, wobei sowohl das erste und zweite Ende jeweils eine sich in eine Richtung erstreckende Nut enthält, welche zur Aufnahme einer Feder ausgestaltet ist. Hierdurch kann eine bessere Führung und Positionierung des Ausrichtstegs zum Statorblechpaket erreicht werden.

Entsprechend einer weiteren vorteilhaften Ausgestaltungsform kann es möglich sein, dass jeder Ausrichtsteg in einer sich zu einem freien Ende verjüngenden Form ausgestaltet ist. Hierdurch kann ein Einfädeln der Ausrichtstege in das Statorblechpaket erleichtert werden.

Gemäß einer zusätzlichen vorteilhaften Ausgestaltungsform kann es möglich sein, dass mehr als zwei Ausrichtstege, insbesondere sechs symmetrisch zueinander angeordnete Ausrichtstege, enthalten sind. Hierdurch kann eine nahezu optimale Ausrichtung der Wickelstützvorrichtung zum Statorblechpaket erreicht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Vorderansicht auf einen Stator mit einem Statorblechpaket, einer Winkelmesseinheit und einer Wickelstützvorrichtung;
- Figur 2: eine Rückansicht auf das Statorblechpaket zusammen mit der Wickelstützvorrichtung und der Winkelmesseinheit;
- Figur 3: eine perspektivische Rückansicht auf den Stator mit dem Statorblechpaket und der Wickelstützvorrichtu ng;
- Figur 4: eine Detailansicht auf Polzähne des Statorblechpakets mit zwischen den Polzähnen positionierten Ausrichtstege;

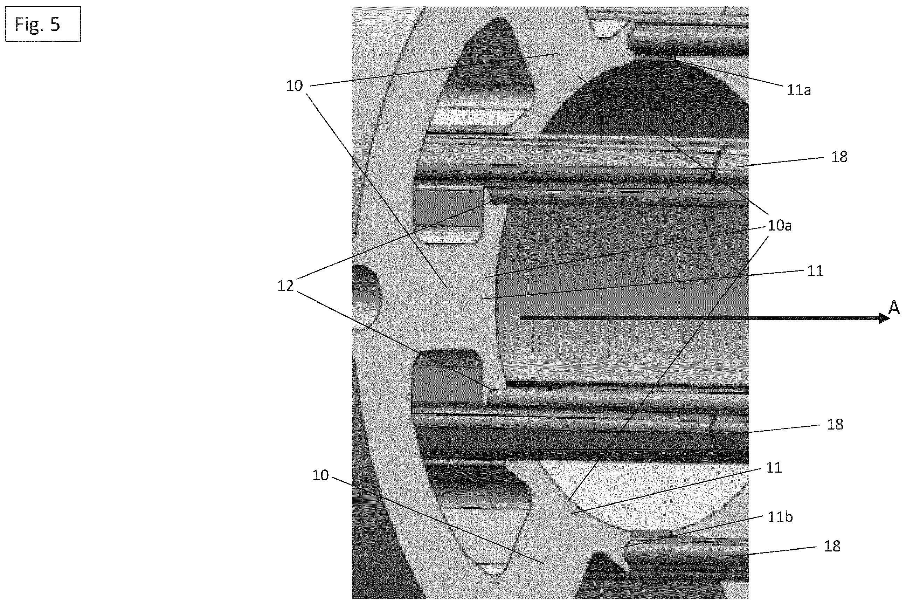

- Figur 5: eine weitere Detailansicht auf die Polzähne des Statorblechpakets mit zwischen den Polzähnen positionierten Ausrichtstegen; und

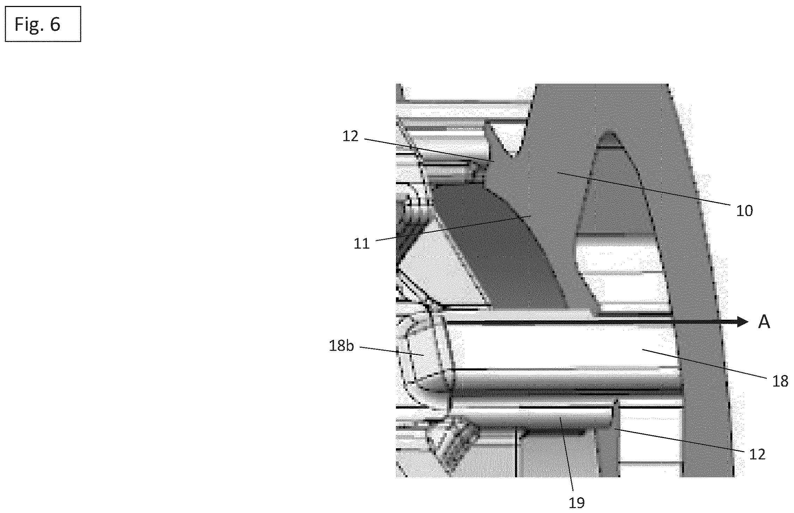

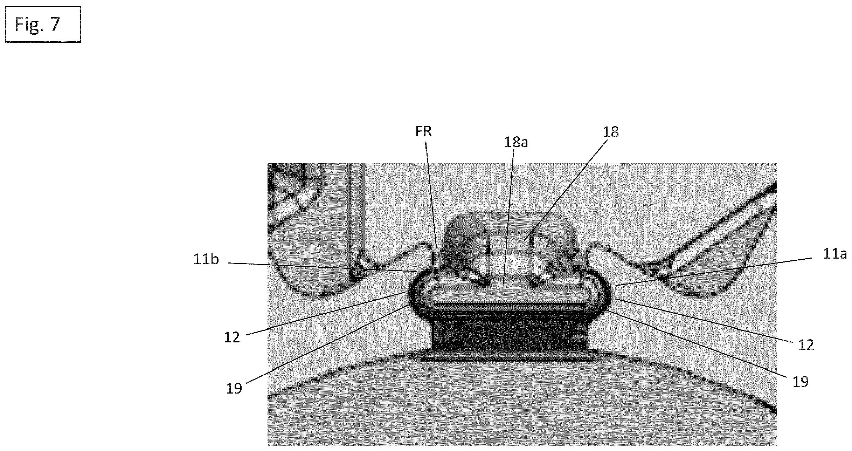

- Figur 6: eine zusätzliche Detailansicht auf die Polzähne des Statorblechpakets mit zwischen den Polzähnen positionierten Ausrichtstegen.

### Ausführungsbeispiele:

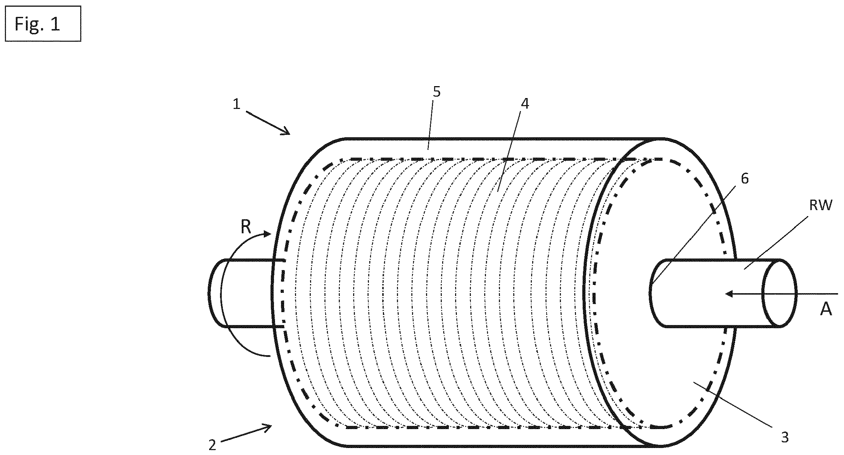

In Figur 1 zeigt einen schematisch dargestellten Elektromotor 1. In dem gezeigten Ausführungsbeispiel handelt sich um einen bürstenlosen Elektromotor.

Der Elektromotor 1 kann wiederum als Antrieb in einer Werkzeugmaschine dienen. Die Werkzeugmaschine kann dabei als Bohrmaschine, Bohrhammer, Säge, Schleifgerät oder dergleichen ausgestaltet sein. Die Werkzeugmaschine sind in den Figuren nicht dargestellt.

Der Elektromotor 1 enthält im Wesentlichen einen Stator 2 sowie einen Rotor 3. Der Rotor 3 ist dabei drehbar relativ zum Stator 2 ausgestaltet und angeordnet. In dem vorliegenden Ausführungsbeispiel ist der Rotor 3 im Inneren des Stators 2 positioniert.

Der Rotor 3 enthält wiederum im Wesentlichen eine Rotorwelle RW und ein Rotorwellenlager. Das Rotorwellenlager ist in den Figuren nicht dargestellt.

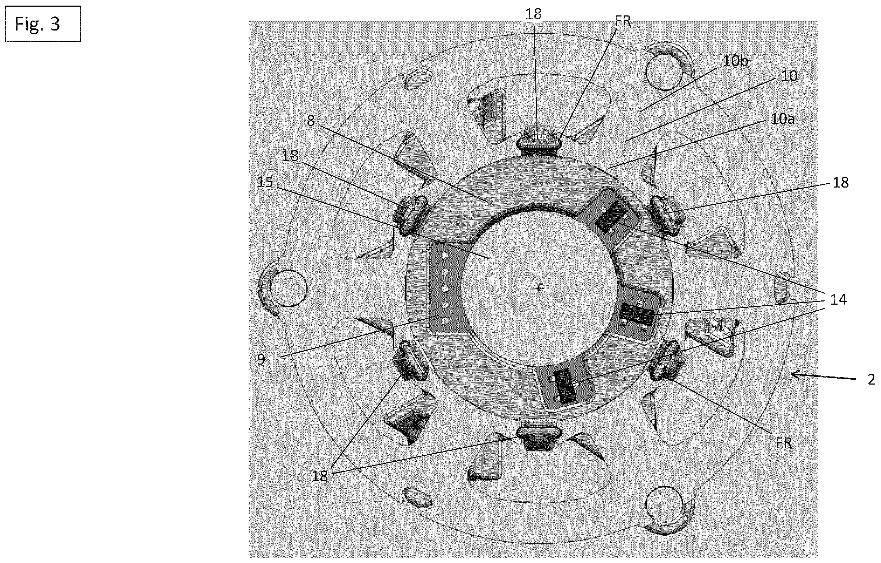

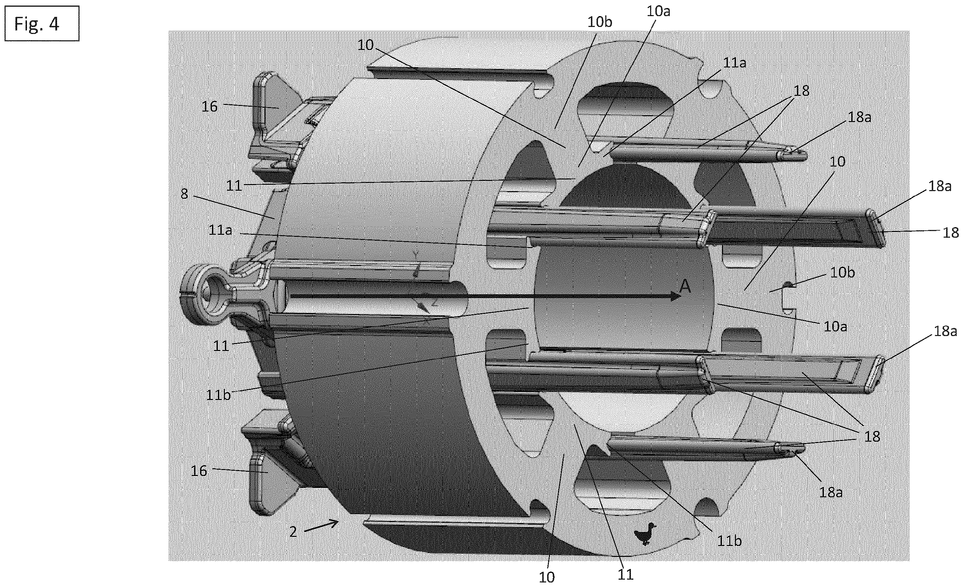

Wie in Figur 3 und 4 angedeutete enthält der Rotor 3 ein Rotorblechpaket 4. Das Rotorblechpaket 4 umfasst dabei mehrere hintereinander gereihte Paketbleche 5 zur Bildung des zylindrischen Rotorblechpaket 4. Das Rotorblechpaket 4 enthält des Weiteren eine zentrale Durchbohrung 6, in die die Rotorwelle RW eingeschoben wird. Die Rotorwelle RW und das Rotorblechpaket 4 sind fest miteinander verbunden. Das Rotorwellenlager ist kreisrund ausgestaltete und dient zur Lagerung der Rotorwelle RW. Die Rotorwelle RW ist hierzu mit einem Ende in die zentrale Öffnung des Rotorwellenlagers positioniert.

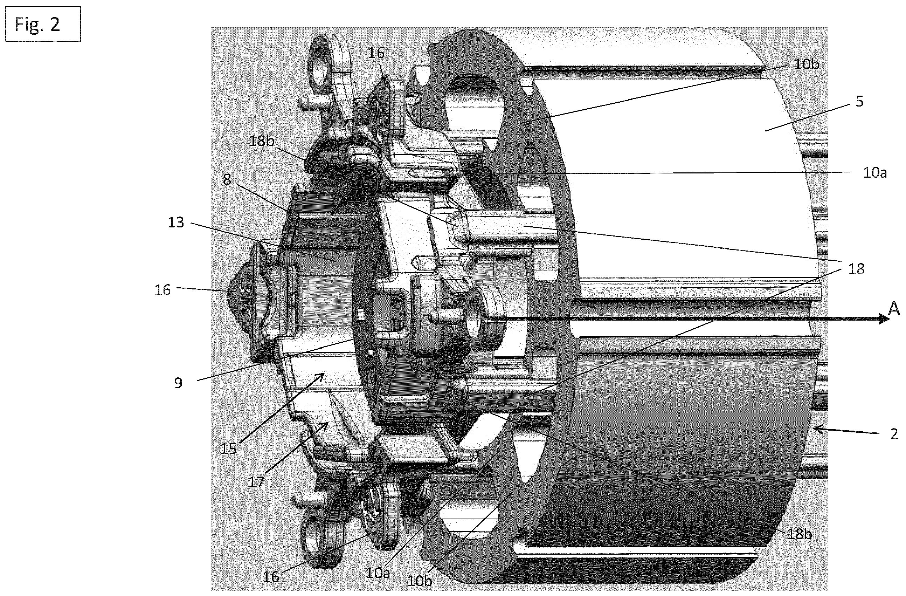

Der Stator 2 enthält im Wesentlichen ein Statorblechpaket 7 (auch nur Blechpaket genannt), eine Wickelstützvorrichtung 8 und eine Winkelmesseinheit 9, siehe insbesondere Figur 2 und 3.
Das Statorblechpaket 7 enthält wiederum sechs in einem Kreis angeordnete Polzähne 10. Jeder Polzahn 10 enthält ein freies und ein festes Ende 10a, 10b. An dem freien Ende 10a eines jeden Polzahns 10 ist jeweils ein Zahnfuss 11 vorgesehen. Jeder Zahnfuss 11 enthält wiederum ein erstes und zweites Ende 11a, 11b. An diesen ersten und zweiten Enden 11a, 11b eines jeden Zahnfusses 11 ist jeweils eine Nut 12 enthalten Die beiden Enden 11a, 11b eines jeden Zahnfusses 11 sind sich gegenüberliegend angeordnet. Wie in Figur 3 ersichtlich ist das erste Ende 11a eines ersten Zahnfusses 11 eines ersten Polzahns 10 zu einem zweiten Ende 11b eines zweiten Zahnfusses 11 eines zweiten Polzahns 10 gerichtet. Hierdurch entsteht zwischen den jeweils ersten und zweiten Enden 11a, 11b von zwei benachbarten Zahnfüssen 11 jeweils eine Führungseinrichtung bestehen aus zwei Nuten 12. Jede Nut 12 erstreckt sich in Richtung A und damit in einer Längserstreckung des Statorblechpakets 7.

Wie in den Figuren ersichtlich ist die Winkelmesseinheit 9 im Wesentlichen als ringförmige Platine mit einer kreisrunden Aussparung 13 ausgestaltet. Die Platine kann auch als Leiterplatte, Leiterkarte oder gedruckte Schaltung bezeichnet werden. Des Weiteren kann die Leiterplatte auch als printed circuit board oder PCB bezeichnet werden. Die Winkelmesseinheit 9 enthält darüber hinaus einen ersten, zweiten und dritten Hall-Sensor 14 zum Erfassen der Magnete, die fest mit dem Rotor 3 verbunden sind. Hierdurch kann ein Drehwinkel des Rotors 3 relativ zum Stator 2 erfasst werden. Die Winkelmesseinheit 9 ist zum Kommutieren des Elektromotors 1 in Abhängigkeit des erfassten Drehwinkels ausgestaltet.

WickelstützvorrichtungWickelstützvorrichtungWickelstützvorrichtung 8 dementsprechend sechs Haken 16. Die Anzahl der Polzähne 10 und die Anzahl der Haken 16 korrespondiert.

Wickelstützvorrichtung 8 des Weiteren eine topfartige Vertiefung 17 mit einer Stirnfläche sowie sechs Ausrichtstege 18.

jeder Ausrichtsteg 18 eine erste und zweite Seitenkante 19. An der ersten Seitenkante 19 ist eine sich in eine Richtung A erstreckende erste Feder und an der zweiten Seitenkante 19 ist wiederum eine sich in Richtung A erstreckende zweite Feder enthalten.

Wie bereits vorstehend erwähnt enthält jeder Zahnfuss 11 eine erste und zweite Nut 12 zur Bildung einer Führungseinrichtung. Die Nut 12 ist dabei so ausgestaltet, dass die Feder eines Ausrichtstegs 18 aufgenommen werden kann. Die Nut 12 kann auch als Freiraum FR zwischen den Polzähnen 10 bezeichnet werden. Es ist zu beachten, dass es auch möglich ist, dass jeder Ausrichtsteg 18 nicht in eine Nut 12, sondern lediglich in einen Freiraum FR zwischen den Polzähnen 10 positioniert werden kann. Jeder Ausrichtsteg 18 wird dann von zwei benachbarten Polzähnen 10 gehalten.
1 Elektromotor;
4 Rotorblechpaket;
5 Paketbleche;
6 zentrale Durchbohrung;
Statorblechpaket;Winkelmesseinheit;Polzahn;
10a freies Ende des Polzahns;
10b festes Ende des Polzahns;
erstes Ende des Zahnfusses;zweites Ende des Zahnfusses;
kreisrunde Aussparung der Winkelmesseinheit; Hall-Sensor;Ausrichtsteg;
18a
18b
Rotorwelle

## Patentansprüche

1. Elektromotor (1), insbesondere für eine Werkzeugmaschine, enthaltend einen Rotor (3) und einen Stator (2) mit einer Statorblechpaket (7), einer Wickelstützvorrichtung (8) sowie einer Winkelmesseinheit (9), wobei das Statorblechpaket (7) eine Vielzahl an Polzähnen (10) enthält und wobei die Winkelmesseinheit (9) wenigstens einem Hall-Sensor (14) zum Erfassen eines Drehwinkels des Rotors (3) relativ zum Stator (2) enthält und die Winkelmesseinheit (9) zum Kommutieren des Elektromotors (1) in Abhängigkeit des erfassten Drehwinkels ausgestaltet ist,
**dadurch gekennzeichnet, dass** die Wickelstützvorrichtung (8) wenigstens zwei Ausrichtstege (18) enthält, welche zur Ausrichtung sowohl der Wickelstützvorrichtung (8) als auch der Winkelmesseinheit (9) zum Statorblechpaket (7) sowie zur Bildung einer formschlüssigen Verbindung der Wickelstützvorrichtung (8) mit dem Statorblechpaket (7) in Freiräume (FR) zwischen den Polzähnen (10) positionierbar sind.

2. Elektromotor (1) nach Anspruch 1,
**dadurch gekennzeichnet, dass** jeder Ausrichtsteg (18) eine erste und zweite Seitenkante (19) enthält, wobei an der ersten Seitenkante (19) eine sich in eine Richtung (A) erstreckende erste Feder und an der zweiten Seitenkante (19) eine sich in eine Richtung (A) erstreckende zweite Feder enthalten und wobei jeder Polzahn (10) jeweils ein Zahnfuss (11) mit einem ersten und zweiten Ende (11a, 11b) enthält, wobei sowohl das erste und zweite Ende (11a, 11b) jeweils eine sich in eine Richtung (A) erstreckende Nut (12) enthält, welche zur Aufnahme einer Feder ausgestaltet ist.

3. Elektromotor (1) nach Anspruch 1 oder 2,
**dadurch gekennzeichnet, dass** jeder Ausrichtsteg (18) in einer sich zu einem freien Ende (18a) verjüngenden Form ausgestaltet ist.

4. Elektromotor (1) nach Anspruch 1 oder 2,
**dadurch gekennzeichnet, dass** mehr als zwei Ausrichtstege (18), insbesondere sechs symmetrisch zueinander angeordnete Ausrichtstege (18), enthalten sind.
